Europäisches Patentamt

European Patent Office

Office européen des brevets

(11) Publication number: **0 452 665 A2**

# EUROPEAN PATENT APPLICATION

(21) Application number: 91103589.7

(51) Int. Cl.⁵: **G01B 11/06**

(22) Date of filing: **08.03.91**

(30) Priority: **20.04.90 IT 2009990**

(43) Date of publication of application:
**23.10.91 Bulletin 91/43**

(84) Designated Contracting States:
**AT BE CH DE DK ES FR GB GR LI LU NL SE**

(71) Applicant: ELECTRONIC SYSTEMS S.P.A.
Viale Ticino 12
Lonate Pozzolo (Varese)(IT)

(72) Inventor: Masotti, Alessandro
Via al Castello 33
I-28040 Lesa (Novara)(IT)

(74) Representative: La Ciura, Salvatore
c/o STUDIO D'ORIO Via F. Sforza, 3
I-20122 Milan(IT)

(54) **Device and scanning method for measuring the thickness of opaque or transparent coatings of any type using a laser.**

(57) The invention concerns a device for detecting the thickness of a coating layer in an opaque or transparent material which has been applied to any kind of surface, matt or shiny.

The device includes two separate laser light sources which emit beams of light that are focused by a lens onto the same point of the surfaces to be measured.

A CCD sensor reads the two beams of light, one of which is diffused and the other reflected, and produces a signal which after being decoded gives the thickness of the coating.

The invention also concerns the method by which these beams of light are read.

EP 0 452 665 A2

The invention described here is a device and method of scanning using a laser to measure the thickness of an opaque, transparent, or semi- transparent coating which has been applied to any kind of surface, even mirror like.

To be more precise, the invention is the device and method required to measure the thickness of a coating, a rubber grille for instance, that has been applied to a cylinder with a highly reflective surface, such a a chrome-plated cylinder.

The aim of the invention is that of allowing the thickness of this coating to be measured, independently of the fact that it can be opaque or transparent, or the type of surface to which it has been applied.

In the description that follows, special reference is made to the use of the invention on a chromed cylinder with a rubber coating, however, the same system can be equally applied to other types of support and/or coating. Laser devices already exist for measuring the thickness of a coating applied to a support, and they generally include a source of polarized infra-red rays which are focused onto the coating to be measured by a lens or optical assembly, and a sensor which is capable of recieving the light that is reflected or diffused by the surface to be measured and providing a signal on the basis of the thickness of the coating.

With these devices, a beam of light is focused in such a way as to project an image around 0.1 to 0.2 mm in size onto the surface, and the sensor used is a PSD sensor. The existing detection systems can be divided into two categories depending on the type of light source used. With diffused light type detection systems, the beam of infra-red light strikes the surface and is diffused all around with an intensity that is greater or smaller depending on the degree of opacity of the surface. This is the reason why this type of sensor is not capable of providing satisfactory results when used to measure the thickness of a transparent or semi-transparent coating.

On the other hand, systems which use reflected light give fairly satisfactory results when used on transparent materials, but are not suitable for use on opaque materials.

For this reason, it is necessary to use different types of sensor which require changing depending on the type of material to be measured, and the machine requires re-calibrating each time they are changed.

In order to get around the limits of the existing systems, the invention described here proposes a device for scanning and measuring the thickness of opaque or transparent coatings that have been applied to any kind of surface, and the device includes a pair of laser sources which are focused on the same point and a CCD type sensor.

One of the two laser sources is diffusion type, and the other is reflecting type, and the sensor thus reads two signals, one diffused from the surface of the coating and the other reflected by the surface of the support, and the sensor provides a signal which after being decoded using existing algorithms, gives an accurate reading of the thickness of the coating.

The invention is described in detail in the part that follows, purely as an example and in no sense limiting it, with special reference to the attached figures, in which:

Figure 1 outlines a scanning device constructed according to the invention;

Figure 2 outlines a second, preferable version of the device constructed according to the invention;

Figure 3 is a graph showing the signal provided by the sensor in a device constructed according to the invention.

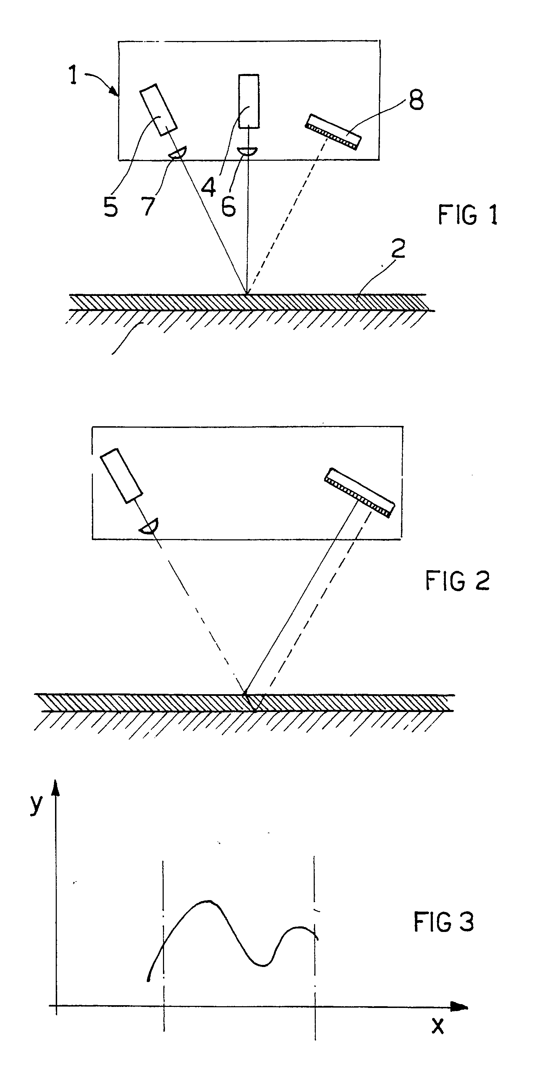

With reference to figure 1, there is a scanning and sensor device (1) constructed according to the invention, that measures the thickness of a coating (2) which has been applied to a surface (3), such as a rubber coating or a similar opaque material that has been applied to a mirror like surface, for instance a chrome-plated surface.

The scanning head (1) consists of a pair of laser sources (4 and 5), one of which is a diffusion type and the other a reflecting type.

These sources are fitted with adjustable optical assemblies (6 and 7) so that the rays of light that are emitted can be focused on the coating (2) and the surface of the support (3) respectively.

There is also a CCD type solid-state sensor (8), which reads the light diffused by the coating (2) and reflected by the support (3), and provides a signal which is proportional to the intensity of light it detects and on the basis of the position of the image projected on the CCD, of the type shown in figure 3, where the position of the signal on the sensor is shown on the X axis, and the amplitude of the signal is shown on the Y axis.

The signal shown in figure 3 refers to the case where the images read by the sensor on the surface of the support (3) and the coating (2) are partly superimposed.

This signal, after having been decoded using existing algorithms, provides an extremely accurate reading of the thickness of the coating.

The use of a CCD type sensor has been seen to be particularly effective in the case where the coating material is not completely opaque.

In this case, a partial superimposition of the images occurs and would result in an error if the previous type PSD sensors were used, whereas a decodable signal is obtained using a CCD type sensor.

In figure 2, a second preferable version of the device according to the invention is shown, in which a single source is used and coupled to a CCD sensor, and which can be advantageously used to check the thickness of a coating layer in a semi-transparent material, even if the coating is free, meaning not attached to a support.

In this case the ray of light produces two images, one reflected from the upper surface of the film, and one from the lower surface, which are picked up by the sensor that then provides a signal of the type shown in figure 3, although the curves are less distinct.

The signal is on the basis of the thickness of the film and moves along the X axis, following the oscillations of the moving film.

It is however always possible to arrive at the thickness of the coating by measuring the wave fronts.

In order to calibrate the above described devices, the light range of the coating support layer is first read, and once zero has been calibrated, the second light source can be activated so that the measurements required can be obtained.

The method according to the invention can also be seen from the above description. The method consists of the detection of the surface of the support and the surface of the coating by scanning with two lasers, one of a reflected light type, and the other of a diffused light type.

An expert in the field could no doubt devise numerous changes and variations, which are however to be considered within the context of the invention described here.

## Claims

1. Device for measuring the thickness of a coating that has been applied to a support, characterized by the fact that it has a pair of laser sources, one of a diffused light type and the other of a reflecting light type, and a single sensor which is capable of receiving light that has been diffused or reflected by the support and coating and which provides a signal on the basis of the thickness of the coating.

2. Device as per Claim 1, in which the sensor is a CCD type solid-state sensor.

3. Device for measuring the thickness of a coating that has been applied to a support, characterized by the fact that it has a laser light source and a CCD sensor which is capable of receiving the images that have been diffused and/or reflected by the surface of the support and that of the coating, and which provides a signal on the basis of the thickness of the coating and is fitted with the necessary equipment for decoding the signal.

4. Method for measuring the thickness of an opaque or transparent coating that has been applied to a surface, characterized by the fact that these surfaces are scanned by two separate laser beams, one of a reflected light type and the other of a diffused light type.

5. Method for measuring the thickness of a free transparent or semi-transparent film, characterized by the fact that the upper and lower surfaces of the film are scanned while the film is in motion by a reflecting type laser source, and that the images reflected from these surfaces are read by a CCD type sensor.

FIG 1

FIG 2

FIG 3